# EUROPÄISCHE PATENTSCHRIFT

(11) **EP 3 436 306 B1**
(45) Veröffentlichungstag und Bekanntmachung des Hinweises auf die Patenterteilung: **21.10.2020**
(21) Anmeldenummer: 17716475.3
(22) Anmeldetag: 21.03.2017
(51) Int. Cl.: B60P 1/16, B60P 1/34

(54) **FAHRZEUG MIT EINEM AUSKIPPBAREN MATERIALSAMMELBEHÄLTER SOWIE ENTLEERUNGSMODUL**
VEHICLE COMPRISING A TIPPABLE MATERIAL COLLECTION CONTAINER AND EMPTYING MODULE
VÉHICULE DOTÉ D'UNE BENNE À MATÉRIAUX BASCULANTE AINSI QUE MODULE DE DÉCHARGEMENT

(30) Priorität: 31.03.2016 DE 102016105849
(43) Veröffentlichungstag der Anmeldung: 06.02.2019
(73) Patentinhaber: RSP GMBH, 07318 Saalfeld (DE)
(72) Erfinder: RENGER, Marina, 07422 Saalfelder Höhe (DE); RENGER, Karl-Heinz, 07422 Saalfelder Höhe (DE); GRABER, Jens, 07422 Saalfelder Höhe (DE)
(74) Vertreter: Engel, Christoph Klaus
(86) Internationale Anmeldenummer: PCT/EP2017/056740
(87) Internationale Veröffentlichungsnummer: WO 2017/167609

(56) Entgegenhaltungen:
- EP-A2- 0 337 678
- DE-A1- 2 811 186
- DE-A1-102012 003 226
- US-A- 6 089 670

## Beschreibung

Die vorliegende Erfindung betrifft ein Fahrzeug mit einem Fahrzeuggestell mit einer Fahrzeuglängsachse, die in einer Fahrzeugmittenebene verläuft. Das Fahrzeug besitzt weiterhin einen auskippbaren Materialsammelbehälter, der an einer parallel zur Fahrzeuglängsachse verlaufenden Kippachse aufgehangen ist. Schließlich besitzt ein gattungsgemäßes Fahrzeug eine Teleskopiereinrichtung, die zwei Teleskoparme aufweist, deren behälterseitiges Ende jeweils an der Kippachse angeordnet ist, um welche der Materialsammelbehälter somit drehbar ist, wobei das gestellseitige Ende jedes Teleskoparms jeweils am Fahrzeuggestell angeordnet ist. Die den Materialsammelbehälter und dessen Lager- sowie Betätigungselemente umfassende Einheit kann bevorzugt in Form eines Entleerungsmoduls aufgebaut sein, welches sowohl auf einem Fahrzeug als auch bei Bedarf im stationären Betrieb ohne das Fahrzeug betrieben werden kann. Daher betrifft die vorliegende Erfindung auch ein derartiges Entleerungsmodul.

Im Zusammenhang mit Nutz- und Lastfahrzeugen ist es bekannt, dass auf einem sogenannten Fahrzeugchassis für den jeweiligen Einsatzzweck erforderliche Aufbauten angeordnet werden, die mehr oder weniger an den mobilen Einsatzfall angepasst sind. Solche Aufbauten werden mit dem Fahrzeuggestell verbunden, wobei in bestimmten Einsatzfällen der Fahrzeughauptantrieb auch als Antriebsaggregat für Zusatzfunktionen genutzt wird, gelegentlich die Aufbauten aber auch unabhängig vom Fahrzeug betriebsfähig sind. Bekannt sind beispielsweise Lastkraftwagen für Schüttgut, die einen Aufnahmebehälter für Material tragen, wobei zum Entladen des Schüttgutes der Aufnahmebehälter um eine Kippachse verkippt wird, sodass das Schüttgut aufgrund der Schwerkraft aus dem Behälter herausgleitet. Es sind in diesem Zusammenhang auch Ausführungsformen von Lastkraftwagen (auch als Kipper bezeichnet) bekannt, die eine in Fahrzeuglängsrichtung verlaufende Kippachse aufweisen, teilweise sogar mit zwei Kippachsen ausgerüstet sind, um das Schüttgut an beiden Seiten des Fahrzeugs auskippen zu können. Die in Längsrichtung verlaufenden Kippachsen sind dabei im Regelfall möglichst nah an der Außenkante des Fahrzeuggestells angeordnet, sodass ein Abkippen der Ladung unmittelbar neben dem Fahrzeug möglich ist.

Einen besonderen Anwendungsfall im Bereich der mobilen Arbeitsmaschinen stellen die sogenannten Saugbagger dar.

Aus der DE 38 37 670 A1 ist ein derartiger Saugbagger bekannt, umfassend einen pneumatischen Saugrüssel, einen Sammelbehälter für das aufgesaugte Erdreich, in den der Saugrüssel mündet und in dem das Erdreich aus dem Saugluftstrom abgeschieden wird, sowie ein an den Sammelbehälter angeschlossenes Sauggebläse zur Erzeugung des Saugluftstroms. Zu den weiteren üblichen Bestandteilen der Saugbagger gehören Führungselemente für den Saugrüssel und Filter zum Reinigen der Saugluft, bevor diese den Sammelbehälter wieder verlässt und an die Umgebung abgegeben wird. Bei der in dieser Druckschrift beschriebenen Bauform des Saugbaggers wird ein Sammelbehälter verwendet, der alternativ um jeweils eine von zwei in Fahrzeuglängsrichtung verlaufenden Kippachsen zur jeweiligen Fahrzugseite hin verkippt werden kann, um das im Sammelbehälter abgeschiedene Material auszuschütten. Die benutzte Kippanordnung entspricht weitestgehend der Gestaltung von Lastkraftwagen mit Kippermulden. Ein Nachteil eines solchen seitlichen Auskippens der Sammelbehälter besteht darin, dass das aufgenommene Material unmittelbar neben dem Fahrzeug zu Boden fällt und bei größeren Materialmengen ein vollständiges Entleeren des Materialsammelbehälters in nur einem Kippvorgang erschwert sein kann. Das Fahrzeug muss daher entweder während des Kippvorgangs verfahren werden oder das Auskippen des Materials muss in einen tiefer gelegenen Bereich erfolgen, um auf diese Weise größere Materialmengen aufnehmen zu können.

Aus der DE 10 2012 003 226 A1 ist ein kippbarer Behälter, insbesondere für Saugbagger bekannt, bei welchem die Kippachse oberhalb des Behälterbodens, vorzugsweise in der oberen Hälfte des Behälters angeordnet ist. Um den Behälter zu entleeren, kann dieser mithilfe einer Hydraulik zunächst angehoben und dabei seitlich verlagert werden, sodass die Kippachse in eine erhöhte Position verfahren wird. Ein zweiter Linearantrieb wirkt daraufhin auf den Behälter ein, um diesen um die Kippachse zu schwenken. Vor dem Entleerungsvorgang muss ein auf dem Behälter angeordneter Deckel durch eine eigene Hydraulik geöffnet und zur Seite verschwenkt werden, um das Anheben und Verkippen des Behälters zu gestatten. Der Aufbau dieses Saugbaggers ist entsprechend kompliziert, wartungsanfällig und teuer. Außerdem hat der vorbekannte Saugbagger den entscheidenden Nachteil, dass der Behälter nur nach einer Fahrzeugseite hin kippbar ist, wodurch der flexible Einsatz des Saugbaggers erheblich eingeschränkt wird.

Die DE 28 11 186 A1, die als nächstliegender Stand der Technik angesehen wird und den Oberbegriff der Ansprüche 1 und 8 offenbart, beschreibt einen Transportbehälter, welcher auf einem Fahrgestell angeordnete ist und mittels einer Kippvorrichtung quer zur Fahrzeuglängsachse kippbar ist. Die beiden Stirnseitenwände des Behälters sind um jeweils einen Lagerzapfen schwenkbar angeordnet. Der Lagerzapfen ist mit den oberen Enden eines Stützbockes verbunden, der zwei je nach einer Längsseite des Fahrgestells weisende Schwenkarme aufweist. Die Schwenkarme sind lösbar an dem Fahrgestell angelenkt, wobei jeweils nur die beiden Schwenkarme, in deren Richtung der Behälter entleert werden soll, mit dem Fahrgestell über Lagerbolzen verbunden sind, während die beiden anderen Schwenkarme manuelle vom Fahrgestell gelöst werden müssen. Zum Kippen des Behälters dienen hydraulische Arbeitszylinder, die mit ihrem unteren Ende in der Mitte des Querträgers und mit ihrem oberen Ende an einer die Schwenkarme starr verbindenden Lasche angelenkt sind. An dem Lagerzapfen ist eine konzentrische Kreisscheibe angeordnet, an der ein Zugseil angreift.

Bei derartigen vorbekannten Lösungen zum Entleeren eines Sammelbehälters sind die Bewegungen zum Anheben und Kippen zwingende voneinander, sodass ein feststehender Bewegungsablauf sowie eine fixe Auskippstellung resultieren. Die Kipphöhe lässt sich nicht verändern und auch die seitliche Kippweite steht fest. Daraus resultiert beispielsweise der Nachteil, dass Teile des Schüttgutes auf dem Fahrzeug-Chassis landen, sofern nicht separate Abweiser angeordnet werden. Zudem müssen manuell Umbauten ausgeführt werden, um beidseitig kippen zu können.

Die Aufgabe der vorliegenden Erfindung besteht ausgehend von der zuvor genannten Druckschrift darin, ein verbessertes Fahrzeug mit auskippbarem Materialsammelbehälter bereitzustellen, welches ein Auskippen des Materialsammelbehälters auf beiden Fahrzeugseiten ermöglicht, gleichzeitig eine in der Höhe variierbare Position der Kippachse gestattet, um ein Entleeren des Materialsammelbehälters auch auf ein erhöhte Fläche, beispielsweise ein nebenstehendes Fahrzeug zu gestatten, sowie mit bewährten und robusten Antriebselementen auskommt.

Diese und weitere Aufgaben werden durch ein Fahrzeug mit den Merkmalen gemäß dem beigefügten Anspruch 1 gelöst.

Wesentliche Vorteile der Erfindung bestehen u.a. darin, dass das Ausfahren, Kippen und Drehen des Sammelbehälters zu beiden Seiten des Fahrzeugs ohne Umbauarbeiten möglich ist. Da Hub- und Kippbewegungen unabhängig voneinander steuerbar sind, werden durch die Erfindung verschiedene Kipppositionen des Behälters ermöglicht, wodurch die Einsatzbedingungen flexibler sind. Außerdem ist es erstmals möglich, den Sammelbehälter seitlich so weit zu schwenken, dass die Kippachse außerhalb der Fahrzeuggrundfläche liegt, sodass beim Entleeren das Fahrzeugchassis nicht mehr durch das Schüttgut verschmutzt wird.

Ein erfindungsgemäßes Fahrzeug zeichnet sich unter anderem dadurch aus, dass die Kippachse parallel zu einer Symmetrieebene des Materialsammelbehälters verläuft, wobei der seitliche Versatz zur Symmetrieebene weniger als 1/8, bevorzugt weniger als 1/12 der Breite des Materialsammelbehälters beträgt. Besonders bevorzugt verläuft die Kippachse in der Symmetrieebene des Materialsammelbehälters, die in einem Ruhe-, Arbeits- oder Transportzustand die Fahrzeuglängsachse einschließt. Der Materialsammelbehälter ist in seiner Längsrichtung im Wesentlichen symmetrisch aufgebaut, insbesondere unter dem Gesichtspunkt der Lastverteilung. Von einem symmetrischen Aufbau im Sinne der vorliegenden Erfindung kann ausgegangen werden, wenn der Materialsammelbehälter bei Aufhängung entlang der Kippachse und ohne Anwendung sonstiger Befestigungs- oder Lagerelemente selbsttätig in eine Position schwenkt, in welcher die Mittelebene im Wesentlichen senkrecht steht und die Oberseite des Materialsammelbehälter im Wesentlichen in einer horizontalen Ebene verläuft. Der

Fachmann wird erkennen, dass ein in diesem Sinne symmetrischer Aufbau auch dann gegeben ist, wenn an dem Materialsammelbehälter zusätzliche Elemente, beispielsweise für die Befestigung oder andere Nebenfunktionen erforderliche Elemente, nur einseitig angebracht sind und insoweit keine streng geometrische Symmetrie gegeben ist.

Weiterhin zeichnet sich das erfindungsgemäße Fahrzeug dadurch aus, dass die gestellseitigen Enden der Teleskoparme besonders bevorzugt in der Fahrzeugmittenebene oder mit nur geringem seitlichen Versatz zu dieser von weniger als 1/8, bevorzugt weniger als 1/12 der Breite des Materialsammelbehälters am Fahrzeuggestell schwenkbeweglich befestigt sind. Dies hat zur Folge, dass die Teleskoparme in einem Ruhe- oder Transportzustand, also bei nicht gekipptem Materialsammelbehälter, im Wesentlichen senkrecht stehen und ebenfalls in der Fahrzeugmittenebene verlaufen. Dies hat auch den Vorteil, dass die Gewichtskraft in diesem Ruhe-, Arbeits- und Transportzustand die vom Materialsammelbehälter und dem darin befindlichen Material ausgeht, in Achsrichtung auf die Teleskoparme einwirkt, die in dieser Richtung hohe Kräfte aufnehmen können, soweit der Materialsammelbehälter nicht auf dem Gestell abgestellt ist.

Das erfindungsgemäße Fahrzeug besitzt darüber hinaus mindestens einen Drehantrieb am behälterseitigen Ende mindestens eines der Teleskoparme. Der Drehantrieb wirkt auf den Materialsammelbehälter ein, um diesen für einen Entleerungsvorgang um die Kippachse zu drehen. Auf Linearantriebe, die separat zwischen dem Materialsammelbehälter und dem Fahrzeuggestell wirken, lässt sich auf diese Weise verzichten. Um größere Kräfte aufzubringen und einen Gleichlauf zu bewirken, können bei einer bevorzugten Ausführungsform zwei Drehantriebe genutzt werden, die sich jeweils am behälterseitigen Ende der beiden Teleskoparme befinden.

Schließlich besitzt das erfindungsgemäße Fahrzeug mindestens einen Schwenkantrieb, der ein Verschwenken der Teleskoparme aus der Fahrzeugmittenebene heraus in beide Winkelrichtungen ermöglicht. Der Schwenkantrieb kann beispielsweise durch Hydraulikzylinder ausgeführt sein, die zwischen dem Fahrzuggestell und dem nicht längs veränderlichen Abschnitt des Teleskoparms wirken. Bei alternativen Ausführungsformen kann der Schwenkantrieb auch als ein weiterer Drehantrieb gestaltet sein, der am gestellseitigen Ende vorzugsweise der beiden Teleskoparme angreift. Ebenso kann der Schwenkantrieb andere Linearantriebe nutzen, die gegebenenfalls gegenläufig wirken, um eine Verschwenken in beide Fahrzeugseitenrichtungen zu gestatten.

Gemäß einer besonders bevorzugten Ausführungsform handelt es sich bei dem Fahrzeug um einen Saugbagger. In diesem Fall ist es besonders zweckmäßig, wenn der Anschluss für den Saugschlauch derart am Materialsammelbehälter vorgesehen ist, dass ein im wesentlichen symmetrischer Eintrag des eingesaugten Materials erfolgt, sodass die Lastverteilung im Materialsammelbehälter unabhängig vom Füllstand ebenfalls im Wesentlichen symmetrisch erfolgt. Bei abgewandelten Ausführungsformen kann der Innenraum des Materialsammelbehälters aber auch unterteilt sein und mehrere Kammern aufweisen, in denen bei Bedarf unterschiedliche Materialien aufgenommen werden können. In nochmals abgewandelten Ausführungsformen kann das Fahrzeug auch für andere Materialsammelzwecke ausgerüstet sein, beispielsweise zur Aufnahme von Schlamm oder Flüssigkeiten.

Es ist vorteilhaft, wenn die Kippachse durch zwei Drehlager verläuft, die sich an den quer zur Fahrtrichtung verlaufenden Stirnwänden des Materialsammelbehälters befinden. Besonders bevorzugt sind diese Drehlager in der oberen Hälfte des Materialsammelbehälters an den Stirnwänden angeordnet, sodass die Kippachse bereits im Ruhezustand deutlich oberhalb des Fahrgestells liegt, beispielsweise in einer Höhe von etwa 2 bis 3 m über der Fahrbahnebene. Eines der Drehlager kann in einer einfachen Ausführung als Zapfenlager gebildet sein.

Bei einer abgewandelten Ausführungsform sind die Drehlager mit einem in axialer Richtung wirkenden Kugelgelenk kombiniert, sodass insbesondere beim Ausfahren der Teleskoparme ein Höhenversatz zwischen den sich gegenüberliegenden Drehlagern auftreten kann, ohne das es zu einer Blockade des Drehlagers kommt. Wenn es die derart weitergebildeten Drehlager und die sonstige Konstruktion gestatten, einen solchen Höhenversatz bewusst einzustellen, kann die Kippachse in Längsrichtung gegenüber dem Fahrzeuggestell geneigt werden sodass beispielsweise im Falle eines geneigt stehenden Fahrzeugs dennoch ein nahezu waagerechtes Auskippen des Materialsammelbehälters möglich bleibt oder auch in einem abgewandelten Fall gezielt eine Verlagerung des Materialsammelbehälters gegenüber der Horizontalen vorgenommen werden kann, beispielsweise um flüssige oder breiige Medien nur an einer Seite des Materialsammelbehälters auslaufen zu lassen.

Eine zweckmäßige Ausführungsform zeichnet sich dadurch aus, dass der Materialsammelbehälter an seiner Oberseite durch einen Deckel verschlossen ist, welcher zur Entleerung geöffnet wird. Dazu besitzt der Deckel vorzugsweise zwei Deckelteile, die an einer in oder nahe zu der Symmetrieebene des Materialsammelbehälters liegenden Klappachse drehbeweglich befestigt sind. Beim Auskippen des Materialsammelbehälters wird somit die Deckelhälfte auf der Fahrzeugseite, zu welcher der Materialsammelbehälter ausgekippt wird, bevorzugt durch Öffnungselemente geöffnet. Es ist vorteilhaft, wenn Verschluss- und Verriegelungselemente vorgesehen sind, um den Deckel während des Saugbetriebs dicht zu verschließen, sodass die Druckverhältnisse im Materialsammelbehälter den Anforderungen eines Saugbaggers genügen.

Erfindungsgemäß sind die Teleskoparme so gestaltet, dass die Differenz der Länge zwischen dem komplett eingefahrenen und dem komplett ausgefahrenen Zustand mindestens 1/4, bevorzugt etwa 1/2 der Höhe des Materialsammelbehälters entspricht. Damit ist gewährleistet, dass der Materialsammelbehälter ausreichend weit angehoben werden kann, um beim nachfolgenden Verkippen keine sonstigen Teile des Fahrzeugs zu beschädigen. Gleichzeitig kann durch ein entsprechend weites Ausfahren der Teleskoparme sichergestellt werden, dass das Entleeren auf eine höhere Ebene möglich bleibt.

Das seitliche Verschwenken der Teleskoparme soll zumindest soweit ermöglicht sein, dass ein gefahrloses Auskippen des Materialsammelbehälters auf der jeweiligen Fahrzeugseite möglich ist, ohne dass das Fahrzeug dabei beschädigt oder durch das herausfallende Material beim Weiterfahren behindert wird. Erfindungsgemäß können die Teleskoparme so weit zu jeder Fahrzeugseite verschwenkt werden, dass die auf die Ebene des Fahrzeuggestells projizierte Kippachse außerhalb der vom Fahrzeuggestell beschriebenen Grundfläche verläuft.

Die genannte Aufgabenstellung wird auch durch ein Entleerungsmodul gelöst, wie es im Anspruch 8 definiert ist. Dieses Entleerungsmodul kann als eigenständiges Baumodul auf einem Fahrzeug montiert sein oder auch im stationären Betrieb genutzt werden. Insbesondere gestattet es der modulartige Aufbau, das Entleerungsmodul auf unterschiedlichen Fahrzeugen anzubringen, je nach gewünschtem Anwendungsfall.

Weitere Einzelheiten, Vorteile und Weiterbildungen der vorliegenden Erfindung ergeben sich aus der nachfolgenden Beschreibung einer bevorzugen Ausführungsform unter Bezugnahme auf die Zeichnung. Es zeigen:
- Fig. 1: eine vereinfachte Ansicht eines Fahrzeugs von hinten, welches einen auskippbaren Materialsammelbehälter umfasst;
- Fig. 2: eine perspektivische Ansicht eines Entleerungsmoduls mit gekipptem Materialsammelbehälter;
- Fig. 3: eine Ansicht des Fahrzeugs von hinten während eines Entleerungsvorgangs.

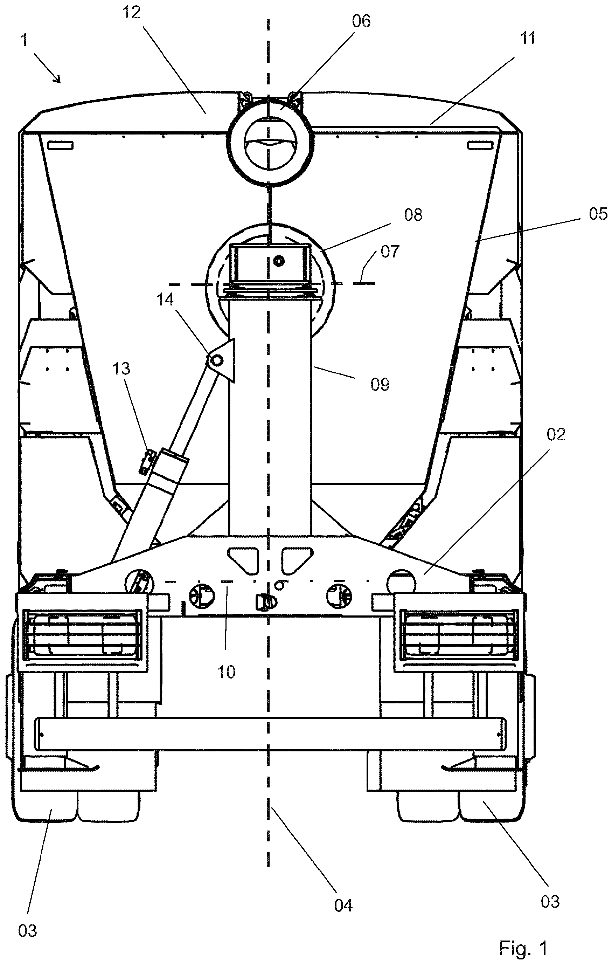

Fig. 1 zeigt in einer vereinfachten Ansicht von hinten ein Fahrzeug 01, bei welchem es sich hier um einen Saugbagger handelt, wobei verschiedene Einzelheiten des Saugbaggers nicht dargestellt sind, da sie für die vorliegende Erfindung nicht von besonderem Interesse sind. Das Fahrzeug 01 besitzt ein Fahrzeuggestell 02. In Bezug auf Fahrzeugräder 03 ist das Fahrzeug symmetrisch zu einer Fahrzeugmittenebene 04 aufgebaut, die in Fig. 1 durch eine strichpunktierte Linie dargestellt ist. Eine Fahrzeuglängsachse 04a verläuft in der Fahrzeugmittenebene. Als Aufbauelement besitzt das Fahrzeug 01 ein Entleerungsmodul mit einem Materialsammelbehälter 05, in welchem das vom Saugbagger aufgesaugte Material gesammelt wird. In diesem Anwendungsfall ist an einem Sauganschluss 06 ein Saugschlauch angeschlossen, über welchen das aufzusaugende Material dem Materialsammelbehälter zugeführt wird.

Der Materialsammelbehälter 05 ist in einer Kippachse 07 aufgehangen, deren Verlauf durch zwei Drehlager 08 definiert ist, welche sich an den quer zur Fahrtrichtung des Fahrzeugs verlaufenden Stirnwänden des Materialsammelbehälters 05 befinden.

Eine Teleskopiereinrichtung umfasst in der gezeigten Ausführungsform zwei Teleskoparme 09, deren behälterseitiges Ende je an eines der Drehlager 08 gekoppelt ist und deren gestellseitiges Ende jeweils an einem Schwenklager 10 schwenkbeweglich am Fahrzeuggestell 02 angebracht ist.

Wie sich aus Fig. 1 entnehmen lässt, befindet sich der Materialsammelbehälter 05 während einer Ruhe-, Transport- oder Arbeitsstellung im Wesentlichen mittig über dem Fahrzeuggestell bzw. einem Hilfsrahmen 02. Eine Oberseite 11 des Materialsammelbehälters 05 verläuft in diesem Zustand im Wesentlichen horizontal. Die Oberseite 11 ist dabei von einem Deckel 12 verschlossen. Die Teleskoparme 09 stehen im Wesentlichen senkrecht zur Ebene des Fahrzeuggestells 02.

Ein als Schwenkantrieb arbeitender Hydraulikzylinder 13 erstreckt sich zwischen dem Fahrzeuggestell 02 und einem Anlenkpunkt 14 am nicht längenveränderlichen Abschnitt des jeweiligen Teleskoparms 09. Der Schwenkantrieb 13 ist so gestaltet, dass er bei seiner Betätigung den Teleskoparm 09 in beide Winkelrichtungen aus der senkrechten Position, d. h. aus der Fahrzeugmittenebene 04 heraus nach links oder rechts schwenken kann.

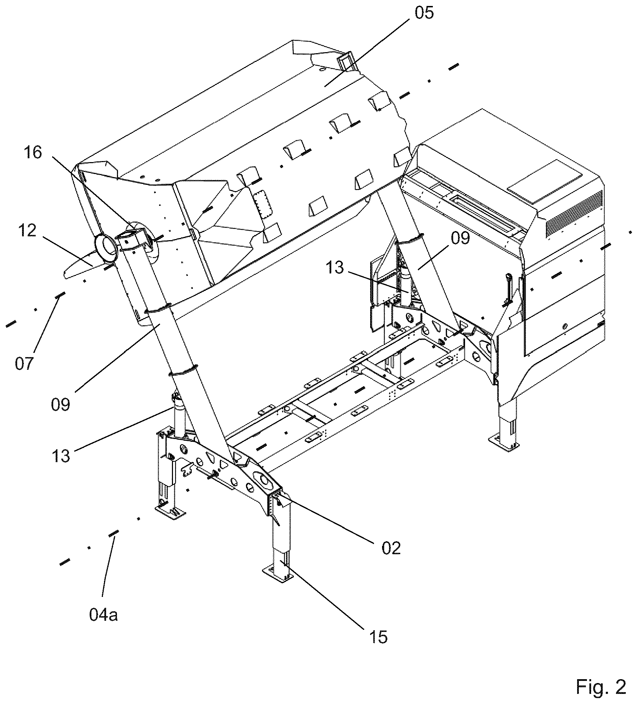

Fig. 2 zeigt eine vereinfachte perspektivische Ansicht eines Entleerungsmoduls, wie es Bestandteil des zuvor beschriebenen Fahrzeugs 01 sein kann. In Fig. 2 sind die zum Fahrzeug 01 gehörenden Chassis-Elemente weitgehend nicht dargestellt. Teile des Fahrzeuggestells können entweder unmittelbar dem Fahrzeug und/oder dem Hilfsrahmen des eigenständig aufgebauten Entleerungsmoduls zugerechnet werden.

Fig. 2 zeigt den Zustand der Entleerung des Materialsammelbehälters 05. Dazu werden die Teleskoparme 09 in Längsrichtung ausgefahren und nach Erreichen einer Mindesthöhe, die ein Verschwenken gestattet, durch Aktivierung des Schwenkantriebs 13 zu einer der beiden Fahrzeugseiten bzw. Modulseiten verschwenkt. Im dargestellten Beispiel wurde der Materialsammelbehälter 05 bezogen auf die Fahrtrichtung nach links verschwenkt.

Zum sicheren Stand des Fahrzeugs bzw. des Moduls während des Entleerungsvorgangs können Stützen 15 ausgefahren werde, sodass das Fahrzeug einen möglichst waagerechten Stand einnimmt.

Nach dem axialen Ausfahren der Teleskoparme 09 und dem Verschwenken wird ein Drehantrieb 16 aktiviert, der im Bereich der Drehlager 08 angeordnet bzw. in diese integriert sein kann. Die Aktivierung des Drehantriebs 16 bewirkt eine Drehung des Materialsammelbehälters 05 um die Kippachse 07, sodass sich die Oberseite 11 zur Seite bzw. nach unten neigt, um bei geöffnetem Deckel 12 das im Materialsammelbehälter 05 gesammelte Material auszukippen.

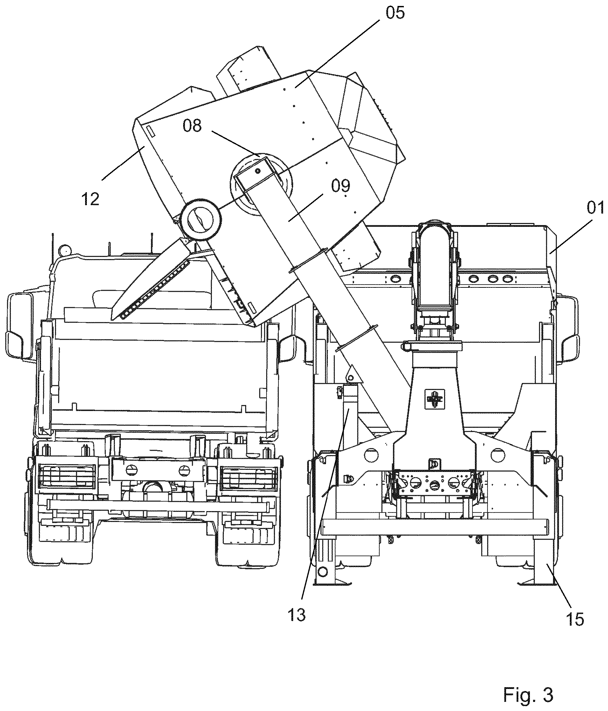

Fig. 3 zeigt in einer vereinfachten Ansicht von hinten nochmals den Zustand während der Entleerung des Materialsammelbehälters 05. In dieser Darstellung ist gut ersichtlich, dass durch das Ausfahren der Teleskoparme 09 die Kippachse 07 soweit nach oben verlagert ist, dass die bei verkipptem Materialsammelbehälter 05 unten liegende Kante der Oberseite 11 beispielsweise in einer Höhe von 2-3 m liegen kann, sodass ein Entleeren des Materialsammelbehälters 05 in einen neben dem Fahrzeug stehenden Lastkraftwagen möglich wird. Dafür ist es erforderlich, dass der Deckel 12 zumindest teilweise geöffnet ist, vorzugsweise durch Verschwenken einer Deckelhälfte um eine Klappachse, die etwa in der Mittelinie der Oberseite 11 verläuft.

Aus Fig. 3 ist auch ersichtlich, dass durch das seitliche Verschwenken der Teleskoparme 09 mithilfe des Schwenkantriebs 13 die Kippachse 07 links neben dem Fahrzeug verläuft bzw. bei einem Verschwenken in die andere Richtung rechts neben dem Fahrzeug 01 verlaufen kann. Ein Entleeren des Materialsammelbehälters 05 ist dadurch sowohl auf der linken als auch auf der rechten Seite des Fahrzeugs möglich.

Die Teleskoparme 09 sind bevorzugt mit einer integrierten Linearführung ausgestattet und in an sich bekannter Weise durch Hydraulikzylinder ein- uns ausfahrbar. Im Regelfall wird ein paralleler Betrieb der beiden Teleskoparme durch eine entsprechende Steuerung ermöglicht, wobei in bestimmten Anwendungssituationen auch ein unterschiedlich starkes Ausfahren der beiden Teleskoparme zweckmäßig sein kann.

Um Verwindungen zu vermeiden ist bevorzugt jedem der beiden Teleskoparme 09 ein Schwenkantrieb 13 zugeordnet, wie es aus Fig. 2 ersichtlich ist. Diese beiden Schwenkantriebe 13 werden ebenfalls im Gleichlauf betrieben. An den behälterseitigen Enden der Teleskoparme 09 kann jeweils der genannte Drehantrieb 16 angeordnet sein oder nur einer der Teleskoparme 09 ist mit dem Drehantrieb ausgerüstet, während an dem anderen Teleskoparm eine Zapfenlagerung das Drehlager realisiert.

### Bezugszeichenliste

- 01: Fahrzeug
- 02: Fahrzeuggestell / Hilfsrahmen
- 03: Fahrzeugräder
- 04: Fahrzeugmittenebene
- 04a: Fahrzeuglängsachse
- 05: Materialsammelbehälter
- 06: Sauganschluss
- 07: Kippachse
- 08: Drehlager
- 09: Teleskoparme
- 10: Schwenklager
- 11: Oberseite
- 12: Deckel
- 13: Schwenkantrieb
- 14: Anlenkpunkt
- 15: Stützen
- 16: Drehantrieb

## Patentansprüche

1. Fahrzeug (01) mit:
- einem Fahrzeuggestell (02), wobei eine Fahrzeuglängsachse (04a) des Fahrzeugs in einer Fahrzeugmittenebene (04) verläuft;
- einem auskippbaren Materialsammelbehälter (05), der in einer parallel zur Fahrzeuglängsachse (04a) verlaufenden Kippachse (07) aufgehängt ist, wobei die Kippachse (07) parallel zu einer Symmetrieebene des Materialsammelbehälters (05) verläuft, und wobei der seitliche Versatz zu der Symmetrieebene weniger als 1/8 der Breite des Materialsammelbehälters (05) beträgt;
- einer Teleskopiereinrichtung, die zwei Teleskoparme (09) besitzt, deren behälterseitiges Ende jeweils an der Kippachse (07) angeordnet ist, um welche der Materialsammelbehälter (05) drehbar ist, und deren gestellseitiges Ende jeweils in der Fahrzeugmittenebene (04) oder mit einem seitlichen Versatz zu dieser von weniger als 1/8 der Breite des Materialsammelbehälters (05) am Fahrzeuggestell (02) schwenkbeweglich befestigt ist;
- mindestens einem Drehantrieb (16), welcher am behälterseitigen Ende mindestens eines Teleskoparms (09) angeordnet ist, um eine Drehung des Materialsammelbehälters (05) um die Kippachse (07) zu ermöglichen;
**dadurch gekennzeichnet, dass**
- mindestens ein Schwenkantrieb (13) angeordnet ist, welcher ein Verschwenken der Teleskoparme (09) aus der Fahrzeugmittenebene (04) heraus in beide Winkelrichtungen ermöglicht, wobei das Verschwenken der Teleskoparme (09) mindestens so weit möglich ist, dass die projizierte Kippachse (07) außerhalb der von dem Fahrzeuggestell (02) beschriebenen Fläche verläuft;
- die Differenz der Länge der Teleskoparme (09) zwischen komplett eingefahrenem und komplett ausgefahrenem Zustand mindestens 1/4 der Höhe des Materialsammelbehälters (05) entspricht.

2. Fahrzeug (01) nach Anspruch 1, **dadurch gekennzeichnet, dass** die Kippachse (07) in der Symmetrieebene des Materialsammelbehälters durch zwei Drehlager (08) verläuft, welche an den quer zur Fahrrichtung verlaufenden Stirnwänden des Materialsammelbehälters (05) angeordnet sind.

3. Fahrzeug (01) nach Anspruch 2, **dadurch gekennzeichnet, dass** die zwei Drehlager (08) an den quer zur Fahrrichtung verlaufenden Stirnwänden des Materialsammelbehälters (05) im Bereich der oberen Hälfte des Materialsammelbehälters (05) angeordnet sind.

4. Fahrzeug (01) nach einem der Ansprüche 1 bis 3, **dadurch gekennzeichnet, dass** an beiden behälterseitigen Enden der zwei Teleskoparme (09) jeweils ein Drehantrieb (16) angeordnet ist, wobei die Steuerung der beiden Drehantriebe (16) miteinander gekoppelt ist, um einen Gleichlauf der Drehantriebe sicherzustellen.

5. Fahrzeug (01) nach einem der Ansprüche 1 bis 4, **dadurch gekennzeichnet, dass** der Schwenkantrieb (13) durch mindestens einen Hydraulikzylinder gebildet ist, welcher spitzwinklig zwischen dem Fahrzeuggestell (02) und dem nicht längenveränderlichen Abschnitt der Teleskoparme (09) verläuft.

6. Fahrzeug (01) nach einem der Ansprüche 1 bis 5, **dadurch gekennzeichnet, dass** der Materialsammelbehälter (05) einen mehrteiligen Deckel (12) besitzt, wobei jedes Deckelteil an einer in der Symmetrieebene des Materialsammelbehälters (05) liegenden Klappachse drehbeweglich befestigt ist.

7. Fahrzeug (01) nach einem der Ansprüche 1 bis 6, **dadurch gekennzeichnet, dass** es sich um einen Saugbagger handelt, wobei der Materialsammelbehälter (05) als Abscheidebehälter für Material dient, welches über einen Sauganschluss (06) als Bestandteil eines Saugstroms zugeführt wird.

8. Entleerungsmodul mit
- einem Gestell (02), welches eine Mittenebene (04) aufweist, in welcher eine Längsachse (04a) verläuft;
- einem auskippbaren Materialsammelbehälter (05), der in einer parallel zur Längsachse (04a) verlaufenden Kippachse (07) aufgehangen ist, wobei die Kippachse (07) parallel zu einer Symmetrieebene des Materialsammelbehälters (05) verläuft, und wobei der seitliche Versatz zu der Symmetrieebene weniger als 1/8 der Breite des Materialsammelbehälters (05) beträgt;
- einer Teleskopiereinrichtung, die zwei Teleskoparme (09) besitzt, deren behälterseitiges Ende jeweils an der Kippachse (07) angeordnet ist, um welche der Materialsammelbehälter (05) drehbar ist, und deren gestellseitiges Ende jeweils in der Fahrzeugmittenebene (04) oder mit einem seitlichen Versatz zu dieser von weniger als 1/8 der Breite des Materialsammelbehälters (05) am Gestell (02) schwenkbeweglich befestigt ist;
- mindestens einem Drehantrieb (16), welcher am behälterseitigen Ende mindestens eines Teleskoparms (09) angeordnet ist, um eine Drehung des Materialsammelbehälters (05) um die Kippachse (07) zu ermöglichen;
**dadurch gekennzeichnet, dass**
- mindestens ein Schwenkantrieb (13) angeordnet ist, welcher ein Verschwenken der Teleskoparme (09) aus der Mittenebene (04) heraus in beiden Winkelrichtungen ermöglicht, wobei das Verschwenken der Teleskoparme (09) mindestens so weit möglich ist, dass die projizierte Kippachse (07) außerhalb der von dem Fahrzeuggestell (02) beschriebenen Fläche verläuft;
- die Differenz der Länge der Teleskoparme (09) zwischen komplett eingefahrenem und komplett ausgefahrenem Zustand mindestens 1/4 der Höhe des Materialsammelbehälters (05) entspricht.

9. Entleerungsmodul nach Anspruch 8, **dadurch gekennzeichnet, dass** es auf ein Fahrzeug montierbar ist.

## Claims

1. A vehicle (01), comprising:
- a vehicle frame (02), wherein a longitudinal axis (04a) of the vehicle runs through a central plane (04) of the vehicle;
- a tiltable material collecting container (05) which is suspended in a tilt axle (07) running parallel to the longitudinal axis (04a) of the vehicle, wherein the tilt axle (07) runs parallel to a plane of symmetry of the material collecting container (05), and wherein a lateral offset relative to the plane of symmetry amounts to less than 1/8 of the width of the material collecting container (05);
- a telescoping device with two telescope arms (09) each of whose container-side ends is arranged on the tilt axle (07) about which the material collecting container (05) can be rotated, and each of whose frame-side ends of the telescope arms (09) are pivotably attached to the vehicle frame (02) in the central plane (04) of the vehicle or with a lateral offset relative to the frame amounting to less 1/8 of the width of the material collecting container (05);
- at least one rotary drive (16) is arranged on the container-side end of at least one telescope arm (09) to enable a rotation of the material collecting container (05) about the tile axle (07);
**characterized in that**
- at least one pivot drive (13) is provided, permitting pivoting of the telescope arms (09) out of the central plane (04) of the vehicle in both angular directions, wherein pivoting of the telescope arms (09) is possible at least to the extent that the projected tilt axle (07) runs outside of an area defined by the vehicle frame (02);
- the difference in the lengths of the telescope arms (09) between completely retracted and completely extended states corresponds to at least 1/4 of the height of the material collecting container (05).

2. The vehicle (01) according to claim 1, **characterized in that** the tilt axle (07) runs through two rotary bearings (08) in the plane of symmetry of the material collecting container (05), said rotary bearings (08) being arranged on end walls of the material collecting container (05) running transversely to the direction of travel.

3. The vehicle (01) according to claim 2, **characterized in that** the two rotary bearings (08) are arranged on the end walls of the material collecting container (05) running transversely to the direction of travel in the region of the upper halves of the material collecting container (05) .

4. The vehicle (01) according to one of the claims 1 to 3, **characterized in that** a rotary drive (16) is arranged on each container-side end of the two telescope arms (09), wherein controllers of the two rotary drives (16) are coupled to one another to ensure synchronized running of the rotary drives (16).

5. The vehicle (01) according to one of the claims 1 to 4, **characterized in that** the pivot drive (13) is formed by at least one hydraulic cylinder which runs at an acute angle between the vehicle frame (02) and a section of the telescope arms (09) that is not variable in length.

6. The vehicle (01) according to one of the claims 1 to 5, **characterized in that** the material collecting container (05) has a multipart cover (12), wherein each cover part is movably attached to a collapsible axle situated in the plane of symmetry of the material collecting container (05) .

7. The vehicle (01) according to one of the claims 1 to 6, **characterized in that** the vehicle (01) is a suction dredge, wherein the material collecting container (05) serves as a container for material which is supplied over a suction connection (06) as a component of a suction stream.

8. An emptying module, comprising
- a frame (02) having a central plane (04) in which a longitudinal axis (04a) extends;
- a tiltable material collecting container (05) which is suspended in a tilt axle (07) running parallel to the longitudinal axis (04a), wherein the tilt axle (07) runs parallel to a plane of symmetry of the material collecting container (05), wherein a lateral offset relative to the plane of symmetry amounts to less than 1/8 of the width of the material collecting container (05) ;
- a telescoping device with two telescope arms (09) each of whose container-side ends is arranged on the tilt axle (07) about which the material collecting container (05) can be rotated, and each of whose frame-side ends of the telescope arms (09) are pivotably attached to the vehicle frame (02) in the central plane (04) of the vehicle or with a lateral offset relative to the frame amounting to less 1/8 of the width of the material collecting container (05);
- at least one rotary drive (16) is arranged on the container-side end of at least one telescope arm (09) to enable a rotation of the tiltable material collecting container (05) about the tile axle (07);
**characterized in that**
- at least one pivot drive (13) is provided, permitting pivoting of the telescope arms (09) out of the central plane (04) of the vehicle in both angular directions, wherein pivoting of the telescope arms (09) is possible at least to the extent that the projected tilt axle (07)runs outside of an area defined by the vehicle frame (02);
- the difference in the lengths of the telescope arms (09) between completely retracted and completely extended states corresponds to at least 1/4 of the height of the material collecting container (05).

9. The emptying module according to claim 8, **characterized in that** the module is configured such that it is mountable on a vehicle.

## Revendications

1. Véhicule (01) avec :
- un châssis de véhicule (02), sachant qu'un axe longitudinal de véhicule (04a) du véhicule passe dans un plan médian du véhicule (04),
- un conteneur collecteur de matériau (05) basculable, qui est suspendu dans un axe de basculement (07) passant parallèlement à l'axe longitudinal de véhicule (04a), sachant que l'axe de basculement (07) passe parallèlement à un plan de symétrie du conteneur collecteur de matériau (05) et sachant que le déport latéral eu égard au plan de symétrie est inférieur à 1/8 de la largeur du conteneur collecteur de matériau (05),
- un système télescopique, qui possède deux bras télescopiques (09), dont l'extrémité côté conteneur est disposée respectivement sur l'axe de basculement (07) autour duquel le conteneur collecteur de matériau (05) peut être tourné et dont l'extrémité opposée est fixée respectivement mobile en pivotement dans le plan médian de véhicule (04) ou avec un déport latéral eu égard à celui-ci de moins de 1/8 de la largeur du conteneur collecteur de matériau (05) sur le châssis de véhicule (02),
- au moins un entraînement en rotation (16), lequel est disposé à l'extrémité côté conteneur d'au moins un bras télescopique (09) pour permettre une rotation du conteneur collecteur de matériau (05) autour de l'axe de basculement (07),
**caractérisé en ce qu'**
- au moins un entraînement de pivotement (13) est disposé, lequel permet un pivotement des bras télescopiques (09) hors du plan médian de véhicule (04) dans les deux directions angulaires, sachant que le pivotement des bras télescopiques (09) est au moins possible jusque dans la mesure où l'axe de basculement (07) projeté passe en dehors de la surface décrite par le châssis de véhicule (02),
- la différence de la longueur des bras télescopiques (09) entre l'état complètement rentré et complètement sorti correspond au moins à 1/4 de la hauteur du conteneur collecteur de matériau (05).

2. Véhicule (01) selon la revendication 1, **caractérisé en ce que** l'axe de basculement (07) passe dans le plan de symétrie du conteneur collecteur de matériau par deux coussinets de pivotement (08), lesquels sont disposés sur les parois avant du conteneur collecteur du conteneur collecteur de matériau (05), passant transversalement au sens de déplacement.

3. Véhicule (01) selon la revendication 2, **caractérisé en ce que** les deux coussinets de pivotement (08) sont disposés sur les parois frontales du conteneur collecteur de matériau (05) passant transversalement à la direction de marche dans la zone de la moitié supérieure du conteneur collecteur de matériau (05).

4. Véhicule (01) selon l'une quelconque des revendications 1 à 3, **caractérisé en ce qu'**aux deux extrémités côté conteneur des deux bras télescopiques (09) est respectivement disposé un entraînement en rotation (16), sachant que la commande des deux entraînements en rotation (16) est couplée à l'un et à l'autre pour assurer une synchronisation des entraînements en rotation.

5. Véhicule (01) selon l'une quelconque des revendications 1 à 4, **caractérisé en ce que** l'entraînement en pivotement (13) est formé par au moins un vérin hydraulique, lequel passe à angle aigu entre le châssis de véhicule (02) et la section non modifiable en longueur des bras télescopiques (09).

6. Véhicule (01) selon l'une quelconque des revendications 1 à 5, **caractérisé en ce que** le conteneur collecteur de matériau (05) possède un capot en plusieurs parties (12), sachant que chaque partie de capot est fixée mobile en rotation sur un axe de rabattement situé dans le plan de symétrie du conteneur collecteur de matériau (05).

7. Véhicule (01) selon l'une quelconque des revendications 1 à 6, **caractérisé en ce qu'**il s'agit d'une drague suceuse, sachant que le conteneur collecteur de matériau (05) sert de conteneur séparateur pour du matériau, qui est acheminé par un raccord d'aspiration (06) en tant que constituant d'un flux d'aspiration.

8. Module de déversement avec
- un châssis (02), lequel comporte un plan médian (04) dans lequel passe un axe longitudinal (04a),
- un conteneur collecteur de matériau (05) basculable, qui est suspendu dans un axe de basculement (07) passant parallèlement à l'axe longitudinal (04a), sachant que l'axe de basculement (07) passe parallèlement à un plan de symétrie du conteneur collecteur de matériau (05) et sachant que le déport latéral eu égard au plan de symétrie est inférieur à 1/8 de la largeur du conteneur collecteur de matériau (05),
- un système télescopique, qui possède deux bras télescopiques (09) dont l'extrémité côté conteneur est respectivement disposée sur l'axe de basculement (07) autour duquel le conteneur collecteur de matériau (05) peut tourner et dont l'extrémité côté châssis est fixée mobile en pivotement respectivement dans le plan médian de véhicule (04) ou avec un déport latéral eu égard à celui-ci de moins de 1/8 de la largeur du conteneur collecteur de matériau (05) sur le châssis (02),
- au moins un entraînement en rotation (16), lequel est disposé à l'extrémité côté conteneur d'au moins un bras télescopique (09) pour permettre une rotation du conteneur collecteur de matériau (05) autour de l'axe de basculement (07),
**caractérisé en ce qu'**
- au moins un entraînement en pivotement (13) est disposé, lequel permet un pivotement des bras télescopiques (09) hors du plan médian (04) dans les deux directions angulaires, sachant que le pivotement des bras télescopiques (09) est au moins possible tant que l'axe de basculement (07) projeté passe en dehors de la surface décrite par le châssis de véhicule (02),
- la différence de longueur des bras télescopiques (09) entre un état complètement rentré et complètement sorti correspond à au moins 1/4 de la hauteur du conteneur collecteur de matériau (05) .

9. Module de déversement selon la revendication 8, **caractérisé en ce qu'**il peut être monté sur un véhicule.
